# FASCICULE DE BREVET EUROPEEN

(11) **EP 3 530 166 B1**
(45) Date de publication et mention de la délivrance du brevet: **30.09.2020**
(21) Numéro de dépôt: 19154031.9
(22) Date de dépôt: 28.01.2019
(51) Int. Cl.: A47K 11/02, C05F 17/921, C05F 17/964, E04B 1/00, E04H 1/04, C05F 17/00

(54) **INSTALLATION POUR DES TOILETTES SÈCHES INSTALLÉES DANS UN IMMEUBLE**
ANLAGE FÜR TROCKENTOILETTEN, DIE IN EINEM GEBÄUDE EINGEBAUT SIND
INSTALLATION FOR DRY TOILET INSTALLED IN A BUILDING

(30) Priorité: 21.02.2018 FR 1851469
(43) Date de publication de la demande: 28.08.2019
(73) Titulaire: Sanisphère, 26110 Nyons (FR)
(72) Inventeur: COLOMBOT, Pierre, 26110 SAINT-FERREOL-TRENTE-PAS (FR)
(74) Mandataire: Cabinet Beau de Loménie

(56) Documents cités:
- FR-A1- 2 823 201
- US-A- 4 164 049

## Description

La présente invention concerne le domaine technique général des dispositifs d'assainissement, d'évacuation et de transformation des matières fécales et des urines.

L'objet de l'invention vise plus particulièrement la catégorie des toilettes dites sèches sans recours à un fluide annexe d'évacuation et permettant de s'affranchir d'un branchement sur un réseau général d'évacuation d'eau.

L'état de la technique a proposé de nombreuses variantes de réalisation d'installations de toilettes dites sèches. Comme décrit par exemple par le brevet FR 2 823 201, une telle installation de toilettes comporte généralement un local d'aisance jouxtant un local technique. Le local d'aisance comporte un équipement tel un siège de toilettes ou une dalle de toilettes à la turque. Cet équipement comporte une ouverture d'évacuation gravitaire pour les effluents liquides et pour les déchets solides tels que les matières fécales et les papiers toilettes. Les effluents liquides et les déchets solides sont évacués dans le local technique pour y subir des opérations de traitement telles que séparation, compostage ou lombricompostage.

De telles toilettes sont généralement réservées aux manifestations, aux chantiers ou aux sites isolés comme les départs de randonnées ou les refuges de montagne, voire aux maisons individuelles. Toutefois, ces toilettes sans eau sont installées dans les immeubles de manière exceptionnelle, hormis quelques expérimentations.

Conformément au projet développé dans le cadre de la coopérative d'habitation Equilibre, rapport de la phase d'étude (Compost Toilets Storey Building in Switzerland), par Ralph Thielen de Novembre 2011, chacune des toilettes de l'immeuble comporte un siège pourvu d'une évacuation gravitaire pour les effluents liquides et les déchets solides, raccordée directement à un tuyau vertical débouchant dans un composteur placé dans un local technique aménagé en bas de l'immeuble. Chaque tuyau équipant un siège permet de transférer par simple gravité, depuis l'appartement jusqu'au local de compostage, les déchets solides et les effluents liquides. En pratique, l'implantation d'une telle installation dans un immeuble s'avère relativement complexe à mener à bien. Par ailleurs, l'encombrement d'une telle installation devient vite rédhibitoire dès que le nombre de logements superposés à équiper augmente.

Dans le domaine des toilettes utilisant de l'eau, le brevet US 4 164 049 décrit une installation d'assainissement pour des toilettes installées dans des étages d'un immeuble. Chacune des toilettes est pourvue d'un siège et d'une conduite d'alimentation en eau. Ces toilettes sont pourvues de tubes de sortie reliés à une conduite commune d'évacuation des effluents liquides et des effluents solides, se raccordant à un réseau de collecte. Une telle installation requiert l'installation de l'eau pour son fonctionnement.

La présente invention vise à remédier aux inconvénients de l'état de la technique en proposant une nouvelle installation pour des toilettes sèches conçue pour présenter une implantation relativement facile à mener à bien tout en présentant un encombrement limité même pour un nombre important de logements superposés à équiper dans l'immeuble.

Pour atteindre de tels objectifs, la présente invention concerne une installation pour des toilettes installées selon plusieurs étages superposés d'un immeuble et comportant chacune, un siège pourvu d'une ouverture d'évacuation gravitaire pour les effluents liquides et les déchets solides, l'installation comportant un équipement permettant un acheminement gravitaire des déchets solides jusqu'à un dispositif de traitement des déchets solides placé dans un local technique en bas de l'immeuble.

Selon l'invention, l'équipement d'acheminement comporte pour chacune des toilettes, d'une part, un dispositif de séparation des effluents liquides et des déchets solides issus de l'ouverture d'évacuation gravitaire, adapté pour amener par gravité, les effluents liquides jusqu'à un bac de réception et les déchets solides jusqu'à une zone de stockage des déchets solides, et d'autre part, un dispositif de transfert assurant le déplacement des déchets solides de la zone de stockage jusque dans un tube de descente en traversant une ouverture de passage débouchant dans le tube de descente et équipée d'un système d'obturation interdisant le passage d'air du tube de descente vers les toilettes au moins lorsque le dispositif de transfert ne déplace pas lesdits déchets solides, ce tube de descente comporte plusieurs ouvertures de passage communiquant avec plusieurs dispositifs de transfert appartenant à des toilettes installées selon des étages de l'immeuble, et permet d'amener par gravité les déchets solides jusqu'au dispositif de traitement.

L'installation selon l'invention comporte en outre en combinaison l'une et/ou l'autre des caractéristiques additionnelles suivantes :
- le tube de descente est monté à l'extérieur de l'immeuble ;
- au moins un dispositif de transfert comporte un tiroir sans fond ouvert en partie supérieure et coopérant avec une surface plane pour former la zone de stockage des déchets solides, le tiroir comportant un panneau de poussée des déchets solides s'étendant en vis-à-vis d'un panneau d'obturation fermant l'ouverture de passage du tube de descente lorsque le dispositif de transfert ne déplace pas lesdits déchets solides ;
- au moins un dispositif de transfert comporte un tiroir avec un fond monté pour s'escamoter lorsqu'il est positionné à l'intérieur du tube de descente ou un tiroir monté pivotant permettant de retourner le tiroir à l'intérieur du tube de descente pour y déverser les déchets solides ;
- le tube de descente fait partie d'un circuit de ventilation comportant des ventilateurs et assurant la circulation de l'air de chacune des toilettes vers une sortie d'air ;
- les dispositifs de transfert comportent chacun une commande électronique assurant son fonctionnement en fonction de l'utilisation des toilettes, ces commandes étant pilotées de manière synchronisée entre elles pour autoriser simultanément un unique fonctionnement des dispositifs de transfert ;
- le bac de réception des effluents liquides est intégré dans la dalle des toilettes ;
- le bac de réception des effluents liquides comporte un couvercle siphoïde délimitant un passage pour les effluents liquides débouchant dans les effluents liquides stagnant dans le bac qui est pourvu d'un tuyau d'évacuation de trop plein des effluents liquides ;
- le couvercle siphoïde du bac de réception des effluents liquides est amovible ;
- au moins une des toilettes comporte des buses de projection d'un liquide de nettoyage sous pression amené dans le bac de réception des effluents liquides.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en coupe élévation de côté d'un exemple de réalisation d'une installation de toilettes conforme à l'invention dans un immeuble à quatre étages.
La **Figure 2** est une vue en coupe élévation de face d'un exemple de réalisation d'une installation de toilettes conforme à l'invention prise sensiblement selon les lignes **II- II** de la **Fig. 1****.**
La **Figure 3** est une coupe transversale de l'installation de toilettes prise sensiblement selon les lignes **III-III** de la **Fig. 2****.**
La **Figure 4** est une vue de détail en coupe selon les lignes **IV-IV** de la **Fig. 3** d'une des toilettes faisant partie d'une installation de toilettes conforme à l'invention, en position de remplissage.
La **Figure 5** est une vue de détail en coupe analogue à la **Fig. 4** d'une des toilettes faisant partie d'une installation de toilettes conforme à l'invention, en position de vidange.
La **Figure 6** est une vue en coupe transversale selon les lignes **VI-VI** de la **Fig. 4** d'une des toilettes faisant partie d'une installation de toilettes conforme à l'invention, en position de remplissage.

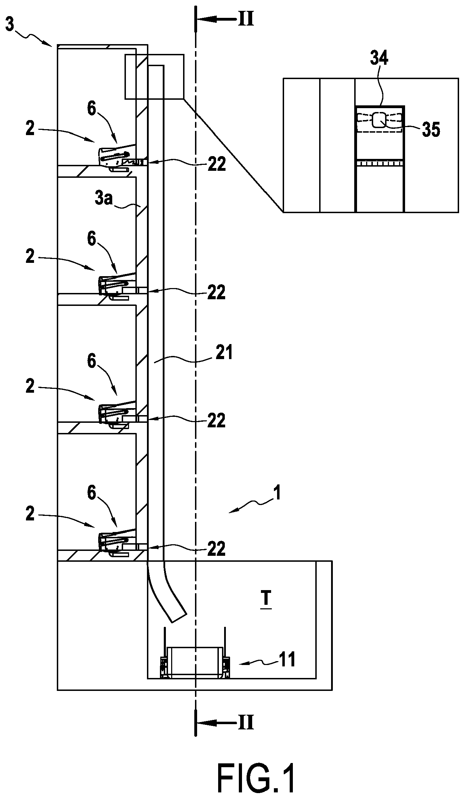

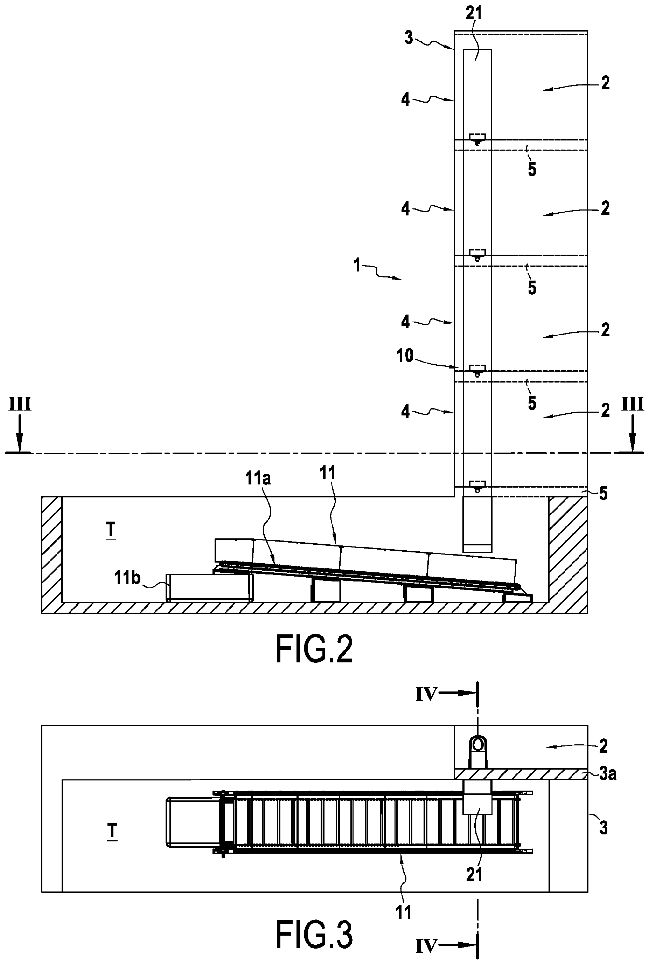

Tel que cela ressort des **Fig. 1** à **3**, l'objet de l'invention concerne une installation **1** pour des toilettes dites sèches **2** installées dans un immeuble **3** au sens général. Un immeuble **3** est un bâtiment comprenant plusieurs étages **4** au nombre de quatre dans l'exemple illustré en incluant un rez-de-chaussée, chacun de ces étages comportant une seule toilettes sur les dessins. Chaque étage **4** est délimité entre deux planchers successifs ou dalles successives **5** dont l'un forme le sol et l'autre le plafond en se raccordant notamment à des murs extérieurs dont l'un **3a** est représenté sur les dessins. Bien entendu, l'installation **1** selon l'invention peut être mise en œuvre pour un immeuble **3** comportant un nombre d'étages différents et pourvus sur chacun d'eux, d'une ou de plusieurs toilettes **2.**

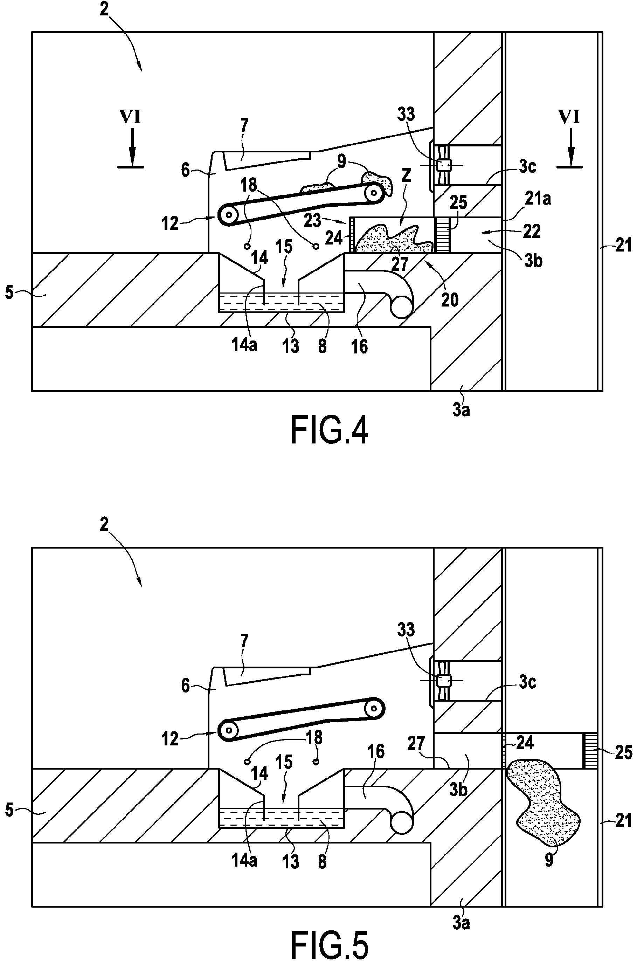

Tel que cela ressort des **Fig. 4** à **6****,** chacune des toilettes **2** est un local d'aisance dans lequel est installé au moins un siège **6** pourvu d'une ouverture d'évacuation gravitaire **7** pour d'une part, des effluents liquides **8** tels que des urines et, d'autre part, des déchets solides **9** composés de matières fécales et de papiers toilettes notamment. Le siège **6** est réalisé de toute manière appropriée pour permettre à une personne de s'assoir, voire de se tenir debout selon une variante plus rudimentaire où le siège se limite à une dalle d'une toilettes à la turque.

L'installation **1** comporte un équipement **10** permettant un acheminement gravitaire des déchets solides jusqu'à un dispositif de traitement **11** des déchets solides, placé dans un local technique **T** situé en bas de l'immeuble **3.** Ce local technique **T** est situé au rez-de-chaussée ou comme illustré sur les dessins, au sous-sol de l'immeuble **3,** en étant aménagé à l'intérieur ou de préférence à l'extérieur de l'immeuble.

Selon une caractéristique de l'invention, l'équipement d'acheminement **10** comporte pour chacune des toilettes **2,** un dispositif **12** de séparation des effluents liquides et des déchets solides. Dans l'exemple préféré de réalisation illustré sur les **figures,** le dispositif de séparation **12** correspond au dispositif décrit par le brevet FR 2 973 213. Selon cet exemple, le dispositif de séparation **12** comporte un tapis roulant incliné au-dessus duquel débouche l'ouverture d'évacuation gravitaire **7.** Ce tapis roulant incliné **12** est positionné pour récupérer les effluents liquides et les déchets solides tombant par l'ouverture d'évacuation gravitaire **7.** Le tapis roulant incliné **12** assure une séparation gravitaire entre les effluents liquides **8** récupérés à la partie basse du tapis roulant et les déchets solides **9** entraînés en translation par le tapis roulant jusqu'à une partie haute pour tomber dans une zone de stockage **Z** où les déchets s'accumulent pour former un tas.

Bien entendu, le dispositif de séparation **12** peut être réalisé de manière différente. Ainsi, le dispositif de séparation **12** peut être réalisé par une simple cuvette comportant deux bols dont l'un est destiné aux effluents liquides **8** et l'autre aux déchets solides **9,** la séparation résultant du positionnement correct de l'utilisateur des toilettes.

Le dispositif de séparation **12** est adapté pour amener par gravité, les effluents liquides **8** jusqu'à un bac de réception **13.** Selon la variante de réalisation illustrée sur les dessins, une partie du bac de réception **13** est positionnée en dessous de la partie basse du tapis roulant **12.**

Selon une variante avantageuse de réalisation, le bac de réception **13** des effluents liquides est intégré dans la dalle **5** des toilettes, dans une zone située en dessous du siège **6.** L'incorporation du bac de réception **13** selon une partie de la hauteur de la dalle **5,** permet de conserver une hauteur classique du siège par rapport au sol où circulent les utilisateurs des toilettes.

Selon une variante avantageuse de réalisation, le bac de réception **13** des effluents liquides comporte un couvercle siphoïde **14** délimitant un passage **15** pour les effluents liquides provenant du dispositif de séparation **12.** Par exemple, le couvercle siphoïde **14** présente à partir de sa périphérie, une forme inclinée en direction de sa partie centrale qui est équipée d'un conduit tubulaire **14a** délimitant le passage **15.** Ce couvercle siphoïde **14** récupère par sa surface supérieure, les effluents liquides **8** amenés par le dispositif de séparation **12.**

Ce passage **15** débouche dans les effluents liquides **8** stagnant dans le bac de réception **13.** A cet effet, le bac de réception **13** est pourvu d'un tuyau **16** d'évacuation de trop plein des effluents liquides. Ce tuyau d'évacuation **16** est aménagé pour laisser stagner une hauteur d'effluents liquides suffisante afin que le conduit tubulaire **14a** du couvercle délimitant le passage **15** se trouve toujours immergé dans les effluents liquides stagnant dans le bac de réception **13.** Une telle disposition permet d'éviter un passage d'air entre l'ouverture d'évacuation gravitaire **7** et le tuyau d'évacuation **16.**

Selon une variante avantageuse de réalisation, le couvercle siphoïde **14** est monté de manière amovible sur le bac de réception **13** des effluents liquides. Une telle disposition permet d'accéder facilement au tuyau d'évacuation **16** en enlevant le couvercle siphoïde **14.**

Selon une variante avantageuse de réalisation, chacune des toilettes **2** comporte des buses **18** de projection d'un liquide de nettoyage sous pression amené dans le bac de réception **13** des effluents liquides. Selon l'exemple illustré sur les dessins, ces buses **18** débouchent pour amener le liquide de nettoyage sur le couvercle siphoïde **14.** Ces buses **18** sont déclenchées de manière séquentielle pour permettre un nettoyage du bac de réception et du tuyau d'évacuation et éviter ainsi la formation de la struvite. Par exemple, il peut être prévu de projeter un litre de liquide de nettoyage pour une centaine d'utilisations des toilettes. Le liquide de nettoyage peut être de l'eau, additionnée ou non d'une substance de dégradation de la struvite.

Selon une caractéristique de l'invention, l'équipement d'acheminement **10** comporte pour chacune des toilettes **2,** un dispositif de transfert **20** assurant le déplacement des déchets solides de la zone de stockage **Z** jusque dans un tube de descente **21** en traversant une ouverture de passage **22** débouchant dans le tube de descente **21.** Chaque ouverture de passage **22** est aménagée pour permettre le déplacement des déchets solides **9** de la zone de stockage **Z** jusque dans le tube de descente **21.** Selon une caractéristique de l'invention, le tube de descente **21** comporte plusieurs ouvertures de passage **22** communiquant avec plusieurs dispositifs de transfert **20** appartenant à des toilettes **2** installées selon différents étages **4** de l'immeuble.

Il doit être compris qu'un tube de descente **21** est commun pour acheminer par gravité jusqu'au dispositif de traitement **11,** les déchets solides provenant de toilettes **2** qui sont placées les unes au-dessus des autres. Ce tube de descente **21** qui est vertical ou quasi vertical est adapté pour récupérer les déchets solides provenant de toilettes **2** superposées ou quasi superposées. Avantageusement, un tube de descente **21** s'étend verticalement pour acheminer les déchets solides de l'ensemble des toilettes de l'immeuble qui sont en position superposée ou quasi-superposée. Dans l'exemple illustré, le tube de descente **21** s'élève sur la hauteur des quatre étages de l'immeuble. Bien entendu, si l'immeuble comporte une autre série de toilettes superposées alors l'installation comporte un deuxième tube de descente **21** pour desservir les toilettes de cette deuxième série de toilettes superposées.

Selon une variante avantageuse de réalisation, le tube de descente **21** est monté à l'extérieur de l'immeuble **3,** de sorte que le tube de descente **21** est séparé des toilettes **2** par un mur extérieur **3a** de l'immeuble. De préférence, le tube de descente **21** est placé contre le mur extérieur **3a** de l'immeuble. Le positionnement du tube de descente **21** en dehors des étages en ne traversant pas les dalles **5,** permet de limiter la transmission du bruit entre les étages et les risques liés notamment aux incendies. Selon cette variante de réalisation illustrée sur les dessins, chaque ouverture de passage **22** comporte un trou de passage **3b** aménagé dans le mur extérieur **3a** et communiquant de manière étanche avec un orifice **21a** aménagé dans le tube de descente **21.** Les déchets solides peuvent ainsi être transférés de la zone de stockage **Z** jusqu'au tube de descente **21** en traversant une ouverture de passage **22.**

Le tube de descente **21** présente une section et des dimensions adaptées pour permettre le transfert par gravité des déchets solides issus des diverses toilettes superposées et amenés par les divers dispositifs de transfert **20** raccordés au tube de descente **21.**

Le tube de descente **21** est adapté pour amener par gravité les déchets solides **9** jusqu'au dispositif de traitement **11** des déchets solides, placé dans le local technique **T** situé en bas de l'immeuble **3.** Ainsi, l'extrémité inférieure du tube de descente **21** pénètre dans le local technique **T** pour amener les déchets solides **9** au dispositif de traitement **11** qui est de tous types appropriés pour assurer le traitement et la transformation des déchets solides par compostage ou lombricompostage. Dans l'exemple illustré sur les **Fig. 1** à **3****,** le dispositif de traitement **11** est conforme au dispositif décrit dans le brevet FR 3 040 279 qui prévoit l'utilisation d'un tapis de convoyage **11a** d'un lit de déchets alimentés par le tube de descente **21.** Ce lit de déchets est déplacé selon une durée déterminée pour obtenir un milieu composté tombant dans un bac **11b** de récupération du milieu composté.

Le dispositif de traitement peut aussi mettre en œuvre la technique décrite par le brevet FR 3 040 280 comportant des bacs déplaçables de 0,1 à plusieurs m³ qui seront successivement positionnés sous le tuyau de descente **21** puis déplacés lorsqu'ils sont pleins afin de laisser le temps nécessaire à la transformation en compost ou en lombricompost, sans risque de contamination par les déchets solides frais.

Le dispositif de traitement **11** pourra également comporter une étape d'hygiénisation destinée à détruire les éventuels germes pathogènes résistants au processus de compostage ou lombricompostage.

Cette étape d'hygiénisation interviendra préférentiellement après la transformation des matières fécales et des papiers toilettes, par compostage ou lombricompostage. Elle consistera, par exemple, en une montée de température suffisante, et pendant une durée suffisante pour détruire les germes pathogènes, dans une chambre prévue à cet effet.

Cette étape d'hygiénisation pourra éventuellement être suivie d'une phase de réensemencement d'organismes vivants, de type bactéries, champignons ou autres, de manière à améliorer les caractéristiques agronomiques du produit final obtenu.

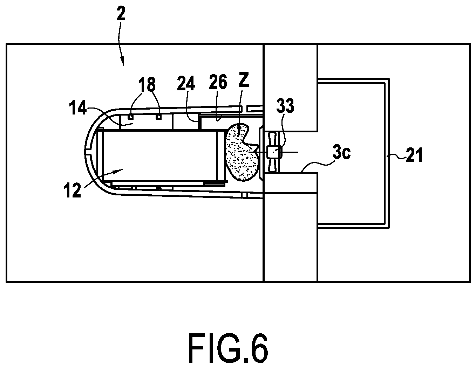

Chaque dispositif de transfert **20** peut être réalisé par tout système mécanique assurant le déplacement des déchets solides **9** de la zone de stockage **Z** jusque dans le tube de descente **21.** Il doit être considéré que les déchets solides **9** de la zone de stockage **Z** se retrouvent accumulés dans un réceptacle **23** dont la capacité de stockage est fonction du nombre d'utilisation des toilettes. Typiquement, la capacité de stockage du réceptacle **23** est de l'ordre d'une centaine d'utilisations des toilettes. Le réceptacle de stockage **23** occupe donc une position de remplissage (**Fig. 4** et **6**) pendant laquelle les déchets solides tombent du dispositif de séparation **12,** et une position de vidange **(****Fig. 5**) pour laquelle les déchets solides sont déversés dans le tube de descente **21.** Le réceptacle de stockage **23** passe de sa position de remplissage à sa position de vidange, après avoir suivi une course de déplacement avantageusement linéaire.

Chaque dispositif de transfert **20** comporte ainsi une commande de préférence électronique assurant son fonctionnement en fonction de l'utilisation des toilettes. Cette commande qui est pilotée manuellement ou de préférence de façon automatique, permet de faire passer le réceptacle de stockage **23** de sa position de remplissage à sa position de vidange, et inversement de sa position de vidange à sa position de remplissage. Au terme d'un cycle de déplacement, le réceptacle de stockage **23** se retrouve de nouveau en position pour recevoir les déchets solides provenant du dispositif de séparation **12.**

Selon une variante avantageuse de réalisation, les commandes des dispositifs de transfert **20** associés à un tube de descente **21** sont pilotées de manière synchronisée entre elles pour autoriser simultanément un unique fonctionnement des dispositifs de transfert. En d'autres termes, les vidanges des réceptacles de stockage **23** sont décalées dans le temps pour éviter que deux réceptacles de stockage **23** soient vidés simultanément dans un tube de descente **21.**

Chaque dispositif de transfert **20** est pourvu d'un mécanisme moteur non représenté, conçu pour assurer le déplacement des déchets solides **9** entre la position de remplissage **(****Fig. 4** et **6**) et la position de vidange **(****Fig. 5**). Ce mécanisme moteur est donc adapté pour faire passer le réceptacle de stockage **23** de sa position de remplissage à sa position de vidange, et inversement, de sa position de vidange à sa position de remplissage. Ce mécanisme moteur de tous types connus en soi, de nature manuelle ou automatique peut être réalisé par un bras articulé, un piston ou un moteur par exemple. Ce mécanisme moteur est piloté par la commande décrite ci-dessus qui à chaque occurrence, permet la réalisation d'un cycle de fonctionnement assurant au réceptacle de stockage **23** de passer de sa position de remplissage à sa position de vidange, et de revenir à sa position de remplissage.

Selon une variante de réalisation illustrée sur les dessins, un dispositif de transfert **20** comporte en tant que réceptacle de stockage **23,** un tiroir formé par un panneau arrière **24** dit de poussée s'étendant en vis-à-vis d'un panneau avant **25** dit d'obturation. Les panneaux arrière **24** et avant **25** sont reliés entre eux par des panneaux de liaison **26.** Le tiroir **23** forme ainsi un tiroir sans fond coopérant avec une surface plane **27** de manière à constituer un réceptacle ouvert en partie supérieure pour permettre de recevoir les déchets solides **9** tombant du dispositif de séparation **12.** Ainsi avantageusement, la zone de stockage **Z** délimitée par le réceptacle de stockage **23,** se trouve intégré au dispositif de transfert **20.**

Le fonctionnement du dispositif de transfert **20** découle directement de la description qui précède.

Au terme d'un nombre d'utilisations données d'une des toilettes, le tiroir **23** est rempli des déchets solides amenés par le dispositif de séparation **12.** La commande du mécanisme moteur du dispositif de transfert **20** est actionnée pour déplacer le tiroir **23** de sa position de remplissage à sa position de vidange, et inversement de sa position de vidange à sa position de remplissage. Lors de son déplacement, le tiroir **23** traverse l'ouverture de passage **22** à savoir le trou de passage **3b** et l'orifice **21a,** avec le panneau arrière **24** qui pousse les déchets solides sur la surface plane **27** jusqu'à ce qu'ils tombent par gravité dans le tube de descente **21.** Le tiroir **23** est déplacé jusqu'à ce que le panneau arrière **24** arrive au moins au niveau de l'orifice **21a** du tube de descente.

Bien entendu, le dispositif de transfert **20** peut être réalisé de manière différente. Selon une autre variante de réalisation, le dispositif de transfert **20** comporte un tiroir avec un fond monté pour s'escamoter lorsqu'il est positionné à l'intérieur du tube de descente. Selon une autre variante de réalisation, le dispositif de transfert **20** comporte un tiroir monté pivotant permettant de retourner le tiroir à l'intérieur du tube de descente pour y déverser les déchets solides.

Selon une autre caractéristique de l'invention, chaque ouverture de passage **22** est équipée d'un système d'obturation **30** interdisant le passage d'air du tube de descente **21** vers les toilettes **2** au moins lorsque le dispositif de transfert **20** ne déplace pas lesdits déchets solides. En d'autres termes, ce système d'obturation ferme de manière hermétique l'ouverture de passage **22** lorsque le réceptacle de stockage **23** occupe sa position de remplissage.

Selon une variante préférée de réalisation illustrée sur les dessins, le système d'obturation **30** est réalisé à l'aide du panneau avant **25** qui en position de chargement du tiroir **23,** obture le trou de passage **3b** et par suite l'ouverture de passage **22.** Ce système d'obturation **30** évite ainsi l'entrée dans les toilettes, de l'air provenant du tube de descente **21.** Par ailleurs, le panneau avant **25** peut être pourvu d'un élément d'isolation thermique.

Bien entendu, il peut être mis en œuvre un système d'obturation **30** fermant hermétiquement l'ouverture de passage **22** de manière continue, même pendant le fonctionnement du dispositif de transfert **20.** Le système d'obturation peut ainsi comporter une sorte de sas de sorte que des systèmes de fermeture se relaient pour obturer continuellement l'ouverture de passage **22.**

L'installation selon l'invention comporte un circuit de ventilation fonctionnant en continu pour éviter les remontées d'odeurs dans les toilettes **2.** Il peut être envisagé de raccorder toutes les toilettes **2** à un circuit de ventilation de l'immeuble ou à un circuit de ventilation spécifique pour ces toilettes.

Selon une variante avantageuse de réalisation illustrée sur les dessins, le tube de descente **21** fait partie d'un circuit de ventilation comportant des ventilateurs **33** et assurant la circulation de l'air de chacune des toilettes **2** vers une sortie d'air **34** (**Fig. 1**). Chacune des toilettes **2** comporte un passage **3c** entre le tube de descente **21** et les toilettes **2** et équipé d'un ventilateur **33.** Dans l'exemple illustré, le passage **3c** est aménagé dans le mur extérieur **3a** de l'immeuble et dans le tube de descente **21.**

Selon cette variante illustrée, le tube de descente **21** comporte au niveau de son extrémité supérieure, un ventilateur d'extraction **35** permettant d'assurer la circulation de l'air provenant des différentes toilettes **2,** vers la partie haute du tube de descente **21** qui comporte la sortie d'air **34.**

Il est à noter qu'il peut être envisagé une autre variante de réalisation visant à inclure le local technique **T** dans le circuit de ventilation. Selon cette variante de réalisation non illustrée, le local technique **T** est équipé d'une cheminée d'extraction munie à son extrémité supérieure qui sert de sortie d'air **34,** du ventilateur d'extraction **35.** Le tube de descente **21** qui ne comporte plus la sortie d'air **34** ni le ventilateur d'extraction **35,** sert ainsi de tube de ventilation permettant la circulation de l'air des toilettes **2** vers le local technique **T** via le tube de descente **21.** De préférence, le local technique **T** est hermétiquement fermé en comportant une unique entrée d'air constituée par le tube de descente **21** et une unique sortie d'air présentée par la cheminée d'extraction.

L'invention n'est pas limitée aux exemples décrits et représentés car diverses modifications peuvent y être apportées sans sortir de son cadre.

## Revendications

1. Installation pour des toilettes (**2**) installées selon plusieurs étages superposés (**4**) d'un immeuble (**3**) et comportant chacune, un siège (**6**) pourvu d'une ouverture d'évacuation gravitaire (**7**) pour les effluents liquides (**8**) et les déchets solides (**9**), l'installation comportant un équipement (**10**) permettant un acheminement gravitaire des déchets solides jusqu'à un dispositif de traitement (**11**) des déchets solides placé dans un local technique (**T**) en bas de l'immeuble, et où l'équipement d'acheminement (**10**) comporte pour chacune des toilettes (**2**), d'une part, un dispositif de séparation (12) des effluents liquides (**8**) et des déchets solides (**9**) issus de l'ouverture d'évacuation gravitaire (**7**), adapté pour amener par gravité, les effluents liquides jusqu'à un bac de réception (**13**) et les déchets solides jusqu'à une zone de stockage (**Z**) des déchets solides, et d'autre part, un dispositif de transfert (**20**) assurant le déplacement des déchets solides de la zone de stockage (**Z**) jusque dans un tube de descente (**21**) en traversant une ouverture de passage (**22**) débouchant dans le tube de descente et équipée d'un système d'obturation (**30**) interdisant le passage d'air du tube de descente vers les toilettes au moins lorsque le dispositif de transfert (**20**) ne déplace pas lesdits déchets solides, ce tube de descente (**21**) comportant plusieurs ouvertures de passage (**22**) communiquant avec plusieurs dispositifs de transfert appartenant à des toilettes installées selon des étages de l'immeuble, et permettant d'amener par gravité les déchets solides jusqu'au dispositif de traitement (**11**).

2. Installation selon la revendication 1, **caractérisée en ce que** le tube de descente (**21**) est monté à l'extérieur de l'immeuble (**3**).

3. Installation selon l'une des revendications précédentes, **caractérisée en ce qu'**au moins un dispositif de transfert (**20**) comporte un tiroir (**23**) sans fond ouvert en partie supérieure et coopérant avec une surface plane (**27**) pour former la zone de stockage (**Z**) des déchets solides, le tiroir comportant un panneau de poussée (**24**) des déchets solides s'étendant en vis-à-vis d'un panneau d'obturation (**25**) fermant l'ouverture de passage du tube de descente lorsque le dispositif de transfert ne déplace pas lesdits déchets solides.

4. Installation selon l'une des revendications précédentes, **caractérisée en ce qu'**au moins un dispositif de transfert (**20**) comporte un tiroir avec un fond monté pour s'escamoter lorsqu'il est positionné à l'intérieur du tube de descente ou un tiroir monté pivotant permettant de retourner le tiroir à l'intérieur du tube de descente pour y déverser les déchets solides.

5. Installation selon l'une des revendications précédentes, **caractérisée en ce que** le tube de descente (**21**) fait partie d'un circuit de ventilation comportant des ventilateurs (**33**, **35**) et assurant la circulation de l'air de chacune des toilettes vers une sortie d'air (**34**).

6. Installation selon l'une des revendications précédentes, **caractérisée en ce que** les dispositifs de transfert (**20**) comportent chacun une commande électronique assurant son fonctionnement en fonction de l'utilisation des toilettes, ces commandes étant pilotées de manière synchronisée entre elles pour autoriser simultanément un unique fonctionnement des dispositifs de transfert.

7. Installation selon l'une des revendications précédentes, **caractérisée en ce que** le bac de réception (**13**) des effluents liquides (**8**) est intégré dans la dalle (**5**) des toilettes.

8. Installation selon l'une des revendications précédentes, **caractérisée en ce que** le bac de réception (**13**) des effluents liquides (**8**) comporte un couvercle siphoïde (**14**) délimitant un passage pour les effluents liquides débouchant dans les effluents liquides (**8**) stagnant dans le bac qui est pourvu d'un tuyau d'évacuation (**16**) de trop plein des effluents liquides.

9. Installation selon la revendication précédente, **caractérisée en ce que** le couvercle siphoïde (**14**) du bac de réception (**13**) des effluents liquides est amovible.

10. Installation selon l'une des revendications précédentes, **caractérisée en ce qu'**au moins une des toilettes (**2**) comporte des buses (**18**) de projection d'un liquide de nettoyage sous pression amené dans le bac de réception (**13**) des effluents liquides.

## Patentansprüche

1. Installation für Toiletten (2), die auf mehreren übereinanderliegenden Stockwerken (4) eines Gebäudes (3) installiert sind und jeweils einen Sitz (6) umfassen, der mit einer Auslassöffnung mit Gefälle (7) für die flüssigen Abwässer (8) und die festen Abfälle (9) ausgestattet ist, wobei die Installation eine Ausrüstung (10) umfasst, die einen Gefälletransport der festen Abfälle bis zu einer Behandlungsvorrichtung (11) der festen Abfälle ermöglicht, die in einem Technikraum (T) im unteren Stock des Gebäudes platziert ist, und wobei die Transportausrüstung (10) für jede der Toiletten (2) einerseits eine Vorrichtung (12) zur Trennung von flüssigen Abwässern (8) und von festen Abfällen (9), die aus der Auslassöffnung mit Gefälle (7) ausgegeben werden, die dazu ausgelegt ist, die flüssigen Abwässer bis zu einem Aufnahmebehälter (13) und die festen Abfälle bis zu einem Lagerbereich (Z) für feste Abfälle durch Schwerkraft mitzuführen, und andererseits eine Übertragungsvorrichtung (20) umfasst, die die Verschiebung der festen Abfälle aus dem Lagerbereich (Z) bis in ein Fallrohr (21) gewährleistet, indem eine Durchlassöffnung (22) durchquert wird, die in das Fallrohr mündet und mit einem Verschlusssystem (30) ausgestattet ist, das den Durchlass von Luft aus dem Fallrohr in Richtung der Toiletten zumindest dann verhindert, wenn die Übertragungsvorrichtung (20) die festen Abfälle nicht verschiebt, wobei dieses Fallrohr (21) mehrere Durchlassöffnungen (22) umfasst, die mit mehreren Übertragungsvorrichtungen verbunden sind, die zu Toiletten gehören, die auf Stockwerken des Gebäudes installiert sind, und es ermöglichen, die festen Abfälle durch Schwerkraft bis zu der Behandlungsvorrichtung (11) mitzunehmen.

2. Installation nach Anspruch 1, **dadurch gekennzeichnet, dass** das Fallrohr (21) an der Außenseite des Gebäudes (3) montiert ist.

3. Installation nach einem der vorhergehenden Ansprüche, **dadurch gekennzeichnet, dass** mindestens eine Übertragungsvorrichtung (20) eine Schublade (23) ohne Boden umfasst, die im oberen Bereich offen ist und mit einer ebenen Fläche (27) zusammenwirkt, um den Lagerbereich (Z) der festen Abfälle zu bilden, wobei die Schublade ein Schubfeld (24) für feste Abfälle umfasst, das sich gegen einer Abdeckplatte (25) erstreckt, die die Durchlassöffnung des Fallrohres verschließt, wenn die Übertragungsvorrichtung die festen Abfälle nicht verschiebt.

4. Installation nach einem der vorhergehenden Ansprüche, **dadurch gekennzeichnet, dass** mindestens eine Übertragungsvorrichtung (20) eine Schublade mit einem montierten Boden, um eingefahren zu werden, wenn sie im Inneren des Fallrohres positioniert ist, oder eine Schublade umfasst, die schwenkbar montiert ist und ermöglicht, die Schublade in das Innere des Fallrohres zurückzudrehen, um dort die festen Abfälle abzuladen.

5. Installation nach einem der vorhergehenden Ansprüche, **dadurch gekennzeichnet, dass** das Fallrohr (21) Teil eines Ventilationskreislaufs ist, der Ventilatoren (33, 35) umfasst und die Zirkulation von Luft aus jeder der Toiletten in Richtung eines Luftaustritts (34) gewährleistet.

6. Installation nach einem der vorhergehenden Ansprüche, **dadurch gekennzeichnet, dass** die Übertragungsvorrichtungen (20) jeweils eine elektronische Steuerung umfassen, die ihren Betrieb in Abhängigkeit von der Nutzung der Toiletten gewährleistet, wobei diese Steuerungen auf untereinander synchronisierte Weise gesteuert werden, um gleichzeitig einen einheitlichen Betrieb der Übertragungsvorrichtungen zu autorisieren.

7. Installation nach einem der vorhergehenden Ansprüche, **dadurch gekennzeichnet, dass** der Aufnahmebehälter (13) der flüssigen Abwässer (8) in die Bodenplatte (5) der Toiletten integriert ist.

8. Installation nach einem der vorhergehenden Ansprüche, **dadurch gekennzeichnet, dass** der Aufnahmebehälter (13) der flüssigen Abwässer (8) einen siphonförmigen Deckel (14) umfasst, der einen Durchlass für die flüssigen Abwässer begrenzt, der in die flüssigen Abwässer (8) mündet, die in dem Behälter stagnieren, der mit einem Überlaufrohr (16) für die flüssigen Abwässer ausgestattet ist.

9. Installation nach dem vorhergehenden Anspruch, **dadurch gekennzeichnet, dass** der siphonförmige Deckel (14) des Aufnahmebehälters (13) der flüssigen Abwässer abnehmbar ist.

10. Installation nach einem der vorhergehenden Ansprüche, **dadurch gekennzeichnet, dass** mindestens eine der Toiletten (2) Düsen (18) zur Projektion einer Reinigungsflüssigkeit unter Druck umfasst, die in dem Aufnahmebehälter (13) der flüssigen Abwässer mitgeführt wird.

## Claims

1. An installation for toilets (2) installed on a plurality of superposed storeys (4) of a building (3) and each comprising a seat (6) provided with a gravity removal opening (7) for liquid effluent (8) and solid waste (9), the installation including conveying equipment (10) enabling solid waste to be conveyed by gravity to a solid waste treatment device (11) placed in a technical facility (T) at the bottom of the building, and wherein the conveying equipment (10) comprises, for each of the toilets (2), firstly a separator device (12) for separating liquid effluent (8) and solid waste (9) coming from the gravity removal opening (7) and adapted to use gravity to take the liquid effluent to a reception tank (13) and the solid waste to a solid waste storage zone (Z), and secondly a transfer device (20) for moving the solid waste from the storage zone (Z) to a descent tube (21) by passing through a through opening (22) leading into the descent tube and fitted with a shutter system (30) preventing air from passing from the descent tube to the toilet, at least so long as the transfer device (20) is not moving said solid waste, the descent tube (21) including a plurality of through openings (22) communicating with a plurality of transfer devices belonging to toilets installed on the storeys of the building and enabling solid waste to be taken by gravity to the treatment device (11).

2. An installation according to claim 1, **characterized in that** the descent tube (21) is installed outside the building (3).

3. An installation according to either preceding claim, **characterized in that** at least one transfer device (20) comprises an upwardly-open bottomless drawer (23) cooperating with a plane surface (27) to form a solid waste storage zone (Z), the drawer including a solid waste thrust panel (24) extending facing a shutter panel (25) that closes the through opening of the descent tube while the transfer device is not moving said solid waste.

4. An installation according to any preceding claim, **characterized in that** at least one transfer device (20) comprises a drawer with a bottom that is mounted to be retracted when the drawer is positioned inside the descent tube, or a drawer that is pivotally mounted enabling the drawer to be turned over inside the descent tube in order to dump the solid waste therein.

5. An installation according to any preceding claim, **characterized in that** the descent tube (21) forms part of a ventilation circuit including fans (33, 35) and serving to cause air to flow from each of the toilets towards an air outlet (34).

6. An installation according to any preceding claim, **characterized in that** each transfer device (20) includes electronic control means enabling it to operate as a function of the use of the toilets, the various control means being operated in mutually synchronized manner so as to allow only one of the transfer devices to operate at any one time.

7. An installation according to any preceding claim, **characterized in that** the reception tank (13) for liquid effluent (8) is integrated in the floor slab (5) of the toilet.

8. An installation according to any preceding claim, **characterized in that** the reception tank (13) for liquid effluent (8) includes a siphon cover (14) defining a passage for the liquid effluent leading into liquid effluent (8) stagnating in the tank, which tank is provided with a liquid effluent overflow removal pipe (16) .

9. An installation according to the preceding claim, **characterized in that** the siphon cover (14) of the liquid effluent reception tank (13) is removable.

10. An installation according to any preceding claim, **characterized in that** at least one of the toilets (2) includes nozzles (18) for spraying cleaning liquid under pressure into the liquid effluent reception tank (13).
